# EUROPÄISCHE PATENTSCHRIFT

(11) **EP 0 941 280 B1**
(45) Veröffentlichungstag und Bekanntmachung des Hinweises auf die Patenterteilung: **06.03.2002**
(21) Anmeldenummer: 97950167.3
(22) Anmeldetag: 11.11.1997
(51) Int. Cl.: C08K 5/00, C08L 25/02

(54) **HALOGENFREI FLAMMWIDRIG AUSGERÜSTETE POLYSTYROL-FORMMASSEN**
HALOGEN-FREE FLAME RESISTANT POLYSTYROL MOULDING MATERIALS
MATIERES DE MOULAGE EN POLYSTYRENE IGNIFUGEES SANS HALOGENE

(30) Priorität: 26.11.1996 DE 19648799
(43) Veröffentlichungstag der Anmeldung: 15.09.1999
(73) Patentinhaber: BASF AKTIENGESELLSCHAFT, 67056 Ludwigshafen (DE)
(72) Erfinder: HÖNL, Hans, D-67271 Obersülzen (DE); SCHWABEN, Hans-Dieter, D-67361 Freisbach (DE); MÖDERSHEIM, Norbert, D-67227 Frankenthal (DE)
(86) Internationale Anmeldenummer: EP9706274
(87) Internationale Veröffentlichungsnummer: WO9823674

(56) Entgegenhaltungen:
- EP-A- 0 489 321
- EP-A- 0 493 814
- EP-A- 0 530 558
- EP-A- 0 587 100

## Beschreibung

Die Erfindung betrifft flammgeschützte thermoplastische Formmassen auf der Grundlage von Polyphenylenethern (PPE) und Styrolpolymerisaten (PS). Solche Mischungen sind an sich bekannt und eignen sich zur Herstellung von Formteilen, die sich im Vergleich zu schlagzäh modifizierten Styrolpolymerisaten, die nicht mit Polyphenylenether abgemischt sind, durch eine bessere Wärmeformbeständigkeit auszeichnen. Die Materialeigenschaften derartiger Formteile sind im allgemeinen zufriedenstellend, doch haben diese Polymermischungen den Nachteil, die Ausbreitung von Bränden zu fördern. Vielfach führt aber der Versuch, diese Werkstoffe flammwidrig auszurüsten zu einer verminderten Wärmeformbeständigkeit.

Es ist aus der DE-A-41 01 805 bekannt, halogenfrei ausgerüstete, schlagfest modifizierte und brandgeschützte Formmassen mit erhöhter Fließfähigkeit herzustellen auf der Grundlage von Mischungen von schlagfestem Polystyrol und Polyphenylenethern, die als flammwidrige Zusätze aromatische Sulfonamide und phosphorhaltige Verbindungen wie Triphenylphosphat oder Triphenylphosphinoxid enthalten.

Typische Formmassen der in DE-A-41 01 805 vorgeschlagenen Art bestehen aus etwa
- A:: 5 bis 94 Gew.-% eines Polyphenylenethers A,
- B:: 3 bis 94 Gew.-% eines schlagfest modifizierten Styrolpolymerisats B,
- C:: 1 bis 20 Gew.-% eines aromatischen Sulfonamids C,
- D:: 0 bis 30 Gew.-% eines phosphorhaltigen Flammschutzmittels D und
- E:: wenn erforderlich, weiteren Zusatzstoffen E in üblichen Mengen.

Schlagfest modifiziertes Polystyrol erreicht durch die Zugabe von aromatischen Sulfonamiden eine Verbesserung der Fließfähigkeit, die allerdings erkauft wird mit einer deutlichen Herabsetzung der Wärmeformbeständigkeit.

Es sind flammfeste Formmassen im Handel erhältlich, die aus etwa 30 Gew.-% Polyphenylenether, 60 Gew.-% schlagzäh modifiziertem Polystyrol, 10 Gew.-% Phosphorverbindungen und etwas Melamin sowie üblichen Hilfsmitteln und Stabilisatoren bestehen. Diese Mischungen sind jedoch kostspielig, da sie verhältnismäßig viel von dem aufwendig herzustellenden Polyphenylenether enthalten.

Es ist eine Aufgabe der Erfindung, Mischungen auf der Grundlage von schlagfest modifizierten Styrolpolymerisaten und Polyphenylenethern anzugeben, die bei geringeren Einsatzstoffkosten und damit Herstellkosten verbesserten Brandschutz bieten sollten. Diese Mischungen sollten insbesondere für den Bereich der Unterhaltungselektronik (z.B. TV-Gehäuse) sein.

Es wurde nun gefunden, daß thermoplastische Formmassen auf der Grundlage einer Flammschutzmittel enthaltenden Mischung eines schlagfest modifizierten Styrolpolymerisats und eines Polyphenylenethers eine besonders günstige Kombination von Eigenschaften bei besonderer Preiswürdigkeit aufweisen, wenn sie enthalten, jeweils bezogen auf die Summe aus A bis E,
mindestens 3, jedoch nicht mehr als 30 Gew.-% eines Polyphenylenethers A,
mindestens 10, jedoch nicht mehr als 65 Gew.-% eines schlagfest modifizierten Styrolpolymerisats B,
mindestens 30 Gew.-% eines nicht schlagfest modifizierten Styrolpolymerisats C,
0,05 bis 5 Gew.-% eines Radikalbildners D,
1 bis 20 Gew.-% eines phosphorhaltigen Flammschutzmittels E.

### Komponente A:

Die in Frage kommenden Polyphenylenether A sind bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117-189).

### Beispiele für Polyphenylenether sind

Poly(2,6-dilauryl-1,4-phenylen)ether,
Poly(2,6-diphenyl-1,4-phenylen)ether,
Poly(2,6-dimethoxy-1,4-phenylen)ether,
Poly(2,6-diethoxi-1,4-phenylen)ether,
Poly(2-methoxi-6-ethoxi-1,4-phenylen)ether,
Poly(2-ethyl-6-stearyloxi-1,4-phenylen)ether,
Poly(2,6-dichlor-1,4-phenylen)ether,
Poly(2-methyl-6-phenylen-1,4-phenylen)ether,
Poly(2,6-dibenzyl-1,4-phenylen)ether,
Poly(2-ethoxi-1,4-phenylen)ether,
Poly(2-chlor-1,4-phenylen)ether,
Poly(2,5-dibrom-1,4-phenylen)ether.

Bevorzugt werden Polyphenylenether eingesetzt, bei denen die Substituenten Alkylreste mit 1 bis 4 Kohlenstoffatomen sind, wie
Poly(2,6-dimethyl-1,4-phenylen)ether,
Poly(2,6-diethyl-1,4-phenylen)ether,
Poly(2-methyl-6-ethyl-1,4-phenylen)ether,
Poly(2-methyl-6-propyl-1,4-phenylen)ether,
Poly(2,6-dipropyl-1,4-phenylen)ether und
Poly(2-ethyl-6-propyl-1,4-phenylen)ether.

Weiterhin sind Pfropfcopolymere aus Polyphenylenether und vinylaromatischen Polymeren wie Styrol, α-Methylstyrol, Vinyltoluol und Chlorstyrol geeignet.

Geeignete Polyphenylenether weisen im allgemeinen eine intrinsische Viskosität ηₛₚ/c von 0,2-0,7 dl/g auf, gemessen in Chloroform bei 25°C. Dies entspricht einem Molekulargewichtsbereich von etwa 10 000-60 000.

Für die erfindungsgemäßen Formmassen ist
Poly(2,6-dimethyl-1,4-phenylen)ether bevorzugt

### Komponente B

Die Komponente B ist ein schlagfest modifiziertes Styrolpolymerisat (HIPS; high impact polystyrene), das durch Polymerisation von Styrol und gegebenenfalls kern- oder seitenkettenalkylierten Styrolen in Gegenwart von Kautschuk hergestellt wurde. Vorzugsweise wird ausschließlich schlagfest modifiziertes Homopolystyrol verwendet, das in üblicher Weise durch Polymerisation von Styrol in Gegenwart eines Kautschuks erhalten worden ist. Der Kautschukgehalt soll zwischen 3 und 25 Gew.-%, vorzugsweise zwischen 5 und 15 Gew.-% betragen.

Als Kautschuk werden zur Schlagzähmodifizierung von Styrolpolymerisaten geeignete natürliche oder synthetische Kautschuke eingesetzt. Als Kautschuke im Sinne der Erfindung kommen außer Naturkautschuk z.B. Polybutadien, Polyisopren und Mischpolymerisate des Butadiens und/oder Isoprens mit Styrol und anderen Comonomeren, die eine Glastemperatur unter -20°C (nach K.H. Illers und H. Breuer, Kolloidzeitschrift 176 (1961) S. 110) besitzen. Besonders eignen sich Butadienpolymerisate mit einem 1,4-cis-Gehalt, der zwischen 25 und 99 Gew.-% liegt. Es können aber auch Acrylkautschuke, EPDM-, Polybutylen-, Polysiloxan- und Polyoctenamerkautschuke eingesetzt werden. Der mit Styrol gepfropfte Kautschuk (Weichphase) liegt dabei fein verteilt in der als Hartmairix bezeichneten Polystyrolphase vor. Der mittlere Teilchendurchmessen (d₅₀-Wert der integralen Masseverteilung) liegt i.a. zwischen 0,2 und 7 µm. Geeignete schlagfestmodifizierte Polystyrole sind größtenteils handelsüblich und weisen eine VZ der Hartmatrix zwischen 50 und 130 ml/g (0,5%ig in Toluol bei 23°C) auf.

### Komponente C

Die Komponente C ist ein gewöhnliches (nicht schlagfest modifiziertes), sog. Standard-Polystyrol (GPPS), also ein Styrolpolymerisat, das durch Polymerisation von Styrol und gegebenenfalls kern- oder seitenkettenalkylierten Styrolen in Abwesenheit von Kautschuk hergestellt wurde.

Die Verfahren zur Herstellung von Styrolpolymerisaten sind bekannt und werden z.B. in "Ullmanns Encyklopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

### Komponente D

Die Verwendung von Radikalbildnern zur Verbesserung der Flammwidrigkeit von Polymeren ist an sich bekannt. Als Radikalbildner D eignen sich Verbindungen verschiedener Stoffklassen. Geeignet sind z.B. gewisse labile Kohlenwasserstoffe, ferner Peroxide oder Azoverbindungen. Besonders geeignet als Vertreter der Stoffklasse der Kohlenwasserstoffe ist Dicumyl. Die Verwendung von Radikalbildnern in PPE/PS-Mischungen ist z.B. in der EP-A1-546 497 beschrieben.

### Komponente E

Als Phosphorverbindungen eignen sich die im Brandschutz üblichen Verbindungen, die in der Regel handelsüblich sind, wie Phosphorsäureester, Phosphinsäureester, Phosphonsäureester, Phosphinoxide. Auch elementarer (roter) Phosphor ist gegeignet, wenn die damit eintretende Pigmentierung nicht stört. Die Phosphorverbindnungen werden in einer Menge von bis zu 20, vorteilhaft nicht mehr als 15 Gew.-% eingesetzt. Vorteilhaft wird mindestens eine der Verbindung Triphenylphosphat oder Triphenylphosphinoxid eingesetzt.

### Weitere Zusatzstoffe

Die erfindungsgemäßen Mischungen können, wenn erforderlich, weitere Zusatzstoffe (F) in üblichen Mengen enthalten, die in der vorgenannten Summe aus A bis E nicht enthalten sind.

Beispiele solcher weiterer Zusatzstoffe - außer üblichen Verarbeitungshilfsmitteln (Stabilisatoren wie sterisch gehinderte Phenole, Schmiermittel wie Stearate oder Silikonöle) und Farbstoffen, die hier nicht weiter erläutert werden - sind vor allem andere flammhemmende Stoffe wie z.B. aromatische Sulfonamide, stickstoffhaltige Verbindungen wie Melamin oder anorganische Beimengungen wie Aluminium- oder Magnesiumhydroxid oder anorganische Phosphate. Die Mengen an solchen Zusatzstoffen hängen ganz davon ab, welche Rolle diese in der erfindungsgemäßen Mischung spielen sollen. Stabilisatoren werden z.B. in Mengen von 0,01 bis 0,5 Gew.-% eingesetzt; andere flammhemmende Stoffe können - neben den erfindungsgemäßen - z.B. in Mengen von 0,5 bis 2 Gew. -% eingesetzt werden.

### Beispiele

Die erfindungsgemäßen Mischungen wurden auf einer Zweiwellen-Schneckenknetmaschine des Typs ZSK 53 (Schneckenkombination J 55, 250°C, 200 UPM, 35 kg/h) der Fa. Werner & Pfleiderer hergestellt und das erhaltene Granulat den in den Tabellen wiedergegebenen Prüfungen unterworfen.

Die Brandschutzversuche wurden nach UL 94, einer Vorschrift der Underwriters Laboratories vorgenommen. Hinsichtlich der Brandklasse wurde V-2 bei 2,4 mm angestrebt.

### Bestimmungsgrößen nach UL 94: Brennzeit; Gesamtbrennzeit; Abfall brennender Tropfen

Hierzu werden jeweils 5 Probekörper (2,4mm starke Rechteckstäbe der Abmessung 125x13mm) senkrecht angeordnet und am unteren freien Ende mit der 20 mmm (±2 mm) großen Flamme eines Bunsenbrenners zweimal für je 10 Sekunden beflammt, wobei die Pause zwischen den Beflammungen gleich der Naschbrenndauer nach der ersten Beflammung ist (d.h. die zweite Beflammung erfolgt, wenn die zuerst entstandene Flamme erlischt).

Zur Beurteilung des Abtropfens brennender Teile wird unter den Probekörpern im Abstand von 300 mm ein Wattebausch angeordnet. Die Brennzeit nach jeder Beflammung jedes einzelnen Probekörpers wird gemessen und daraus die Gesamtbrennzeit eines Satzes von 5 Probekörpern errechnet.

Die Ergebnisse werden wie folgt eingeordnet:
- V-0:: Nachbrenndauer ≤ 10 sek.
Gesamtnachbrenndauer ≤ 50 sek.
Kein brennendes Abtropfen
- V-1:: Nachbrenndauer ≤ 30 sek.
Gesamtnachbrenndauer ≤ 250 sek.
Kein brennendes Abtropfen
- V-2:: Nachbrenndaüer ≤ 30 sek.
Gesamtnachbrenndauer ≤ 250 sek.
Brennendes Abtropfen

Die in den Beispielen verwendeten Abkürzungen stehen für folgende Materialien (Mengenangaben jeweils in Gew.-%):
- VPU: Schlagzäh modifiziertes Polystyrol aus
8% Polybutadien; Partikelgröße 20-30 nm
0,06% Zinkstearat
92% Standardpolystyrol (VZ 70)
- VPT: Gleitmittelhaltiges Standardpolystyrol aus
0,06% Zinkstearat
98.94% Standardpolystyrol (VZ 74)
- PPE: Polyphenylenether;
Handelsprodukt ®Noryl 8870, M_{w} = 25000
- Stabilisator: o-t-Butylphenol;
Handelsprodukt ®Kerobit TBK
- TPPA: Triphenylphosphat; Handelsprodukt
- Masterbatch: Standardpolystyrol mit 20% Silikonöl

**Tabelle**

| Zusammensetzung (Gew. -%) | | Vgl. 1 | Vgl. 2 | Vgl. 3 | Vgl. 4 | Vgl. 5 | Beispiel |
|---|---|---|---|---|---|---|---|
| VPU | | 84,2 | 64,2 | 44,2 | 83,7 | 63,7 | 43,7 |
| VPT | | 0 | 20 | 40 | 0 | 20 | 40 |
| PPE | | 9 | 9 | 9 | 9 | 9 | 9 |
| TPPA | | 6 | 6 | 6 | 6 | 6 | 6 |
| Dicumyl | | 0 | 0 | 0 | 0,5 | 0,5 | 0,5 |
| Zinkstearat | | 0,5 | 0,5 | 0,5 | 0,5 | 0,5 | 0,5 |
| Masterbatch | | 0,15 | 0,15 | 0,15 | 0,15 | 0,15 | 0,15 |
| Stabilisator | | 0,15 | 0,15 | 0,15 | 0,15 | 0,15 | 0,15 |

| Thermische u. rheo logische Werte | | | | | | | |
|---|---|---|---|---|---|---|---|
| Vicattemperatur VST/B/50 | °C | 80 | 81 | 82 | 79 | 79 | 79 |
| Schmelze-Volumenrate | ml/10m | 9,1 | 10,6 | 13,9 | 9,2 | 11,7 | 16,5 |
| 200/5 | in | | | | | | |

| Mechanische Werte | | | | | | | |
|---|---|---|---|---|---|---|---|
| Schädigungsarbeit (FBT) (MT = 220 °C) | N/mm² | 1,5 | 0,21 | 0,14 | 7,4 | 0,25 | 0,18 |
| Charpy - Kerbschlagzähigkeit | kJ/m² | 9,7 | 8,4 | 6,2 | 9,1 | 8,1 | 5,7 |
| Streckspannung | N/mm² | 27 | 30 | 29 | 26 | 24 | 34 |
| Nominelle Bruchdehnung | % | 34 | 28 | 28 | 35 | 33 | 19 |
| Zug-E-Modul | N/mm² | 1950 | 2150 | 2100 | 1900 | 1850 | 2450 |

| Brennverhalten (2,4 mm Stab) | | | | | | | |
|---|---|---|---|---|---|---|---|
| UL 94 | -- | -- | -- | -- | -- | -- | V-2 |
| Nachbrenndauer | sec | 210 | 182 | 146 | 98 | 103 | 30 |
| Gesamtnachbrenndauer | sec | 648 | 588 | 519 | 337 | 222 | 152 |

## Patentansprüche

1. Thermoplastische Formmasse, enthaltend, jeweils bezogen auf die Summe aus A bis E,
mindestens 3, jedoch nicht mehr als 30 Gew.-% eines Polyphenylenethers A,
mindestens 10, jedoch nicht mehr als 65 Gew.-% eines schlagfest modifizierten Styrolpolymerisats B,
mindestens 30 Gew.-% eines nicht schlagfest modifizierten (Standard-)Styrolpolymerisats C,
0,05 bis 5 Gew.-% eines Radikalbildners D,
1 bis 20 Gew.-% eines phosphorhaitigen Flammschutzmittels E.

2. Formmasse nach Anspruch 1, enthaltend als Radikalbildner D) Peroxide oder Azoverbindungen.

3. Formmasse nach Anspruch 1, enthaltend als phosphorhaltiges Flammschutzmittel E eine phosphororganische Verbindung.

4. Formmasse nach Anspruch 1, enthaltend als phosphorhaltiges Flammschutzmittel E Triphenylphosphat, Triphenylphosphinoxid oder deren Mischung.

5. Formmasse nach Anspruch 1, enthaltend zusätzlich weitere flammhemmende Stoffe, ausgewählt aus der Gruppe der aromatischen Sulfonamide, Melamin, anorganische Phosphate, Aluminiumhydroxid und Magnesiumhydroxid.

6. Formmasse nach Anspruch 1, enthaltend zusätzlich sterisch gehinderte Phenole, Stearate oder Silikonöle.

## Claims

1. A thermoplastic molding composition comprising, in each case based on the total of A to E,
at least 3% by weight, but not more than 30% by weight, of a polyphenylene ether A,
at least 10% by weight, but not more than 65% by weight, of an impact-modified styrene polymer B,
at least 30% by weight of a (standard) styrene polymer C which is not impact-modified,
from 0.05 to 5% by weight of a free-radical generator D,
from 1 to 20% by weight of a phosphorus-containing flame retardant E.

2. A molding composition as claimed in claim 1 which includes, as free-radical generators D, peroxides or azo compounds.

3. A molding composition as claimed in claim 1 which includes, as phosphorus-containing flame retardant E, an organophosphorus compound.

4. A molding composition as claimed in claim 1 which includes, as phosphorus-containing flame retardant E, triphenyl phosphate or triphenylphosphine oxide or mixtures of these.

5. A molding composition as claimed in claim 1 which additionally includes further flame-retardant substances selected from the group consisting of the aromatic sulfonamides, melamine, inorganic phosphates, aluminum hydroxide and magnesium hydroxide.

6. A molding composition as claimed in claim 1 which additionally includes sterically hindered phenols, stearates or silicone oils.

## Revendications

1. Masses de moulage thermoplastiques contenant, à chaque fois par rapport à la somme de A à E,
au moins 3, mais pas plus de 30% en poids d'un poly(éther de phénylène) A,
au moins 10, mais pas plus de 65% en poids d'un polymère de styrène B modifié à haute résistance aux chocs,
au moins 30% en poids d'un polymère de styrène C (standard) sans modificateur de la résistance aux chocs,
0,05 à 5% en poids d'un formateur de radicaux D,
1 à 20% en poids d'un agent ignifuge phosphoré E.

2. Masses de moulage selon la revendication 1, contenant comme formateurs de radicaux D) des peroxydes ou des composés azoïques.

3. Masses de moulage selon la revendication 1, contenant comme agent ignifuge phosphoré E un composé organophosphoré.

4. Masses de moulage selon la revendication 1, contenant en tant qu'agent ignifuge phosphoré E un triphénylphosphate, de l'oxyde de triphénylphosphine ou leurs mélanges.

5. Masses de moulage selon la revendication 1, contenant en outre d'autres substances ignifuges, choisies dans le groupe formé par les sulfonamides aromatiques, la mélamine, des phosphates inorganiques, l'hydroxyde d'aluminium et l'hydroxyde de magnésium.

6. Masses de moulage selon la revendication 1, contenant en outre des phénols à empêchement stérique, des stéarates ou des huiles siliconées.
